(19) Europäisches Patentamt
European Patent Office
Office européen des brevets

(11) **EP 3 586 689 B1**

(12) **FASCICULE DE BREVET EUROPEEN**

(45) Date de publication et mention
de la délivrance du brevet:
**04.05.2022 Bulletin 2022/18**

(21) Numéro de dépôt: **19182211.3**

(22) Date de dépôt: **25.06.2019**

(51) Classification Internationale des Brevets (IPC):
***A47J 27/08*** *(2006.01)*

(52) Classification Coopérative des Brevets (CPC):
**A47J 27/0806**

(54) **AUTOCUISEUR MUNI D'UNE BUTEE POUR COUVERCLE**

SCHNELLKOCHTOPF MIT EINEM ANSCHLAG FÜR DEN DECKEL

PRESSURE COOKER PROVIDED WITH AN ABUTMENT FOR A LID

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2018 FR 1855709**

(43) Date de publication de la demande:
**01.01.2020 Bulletin 2020/01**

(73) Titulaire: **SEB S.A.
69130 Ecully (FR)**

(72) Inventeur: **BLANC, Hervé Eugène René
21000 DIJON (FR)**

(74) Mandataire: **Weber, Jean-François
Cabinet Didier Martin
Les Terrasses des Bruyères -Bâtiment C
314 C Allée des Noisetiers
69760 Limonest (FR)**

(56) Documents cités:
**EP-A1- 3 100 654    EP-A1- 3 329 810
GB-A- 657 982**

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant une cuve métallique, un couvercle métallique indépendant de la cuve et destiné à être rapporté sur la cuve pour passer d'une configuration de déverrouillage dans laquelle le couvercle repose librement sur la cuve, à une configuration de verrouillage dans laquelle le couvercle est attaché à la cuve pour former avec elle une enceinte de cuisson apte à monter en pression, le passage de la configuration de déverrouillage à la configuration de verrouillage ou inversement impliquant au moins une rotation du couvercle selon un axe central de rotation alors qu'il repose sur la cuve, ledit couvercle étant également susceptible de subir, à l'occasion du passage de la configuration de déverrouillage à la configuration de verrouillage ou inversement, un déplacement en translation relativement à la cuve dans un plan perpendiculaire audit axe central de rotation.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur.

L'un des systèmes les plus répandus est le système de verrouillage à baïonnette, qui repose sur la mise en œuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression.

Ces autocuiseurs à baïonnette connus nécessitent, pour passer de la configuration de verrouillage à la configuration de déverrouillage et inversement, d'imprimer un mouvement de rotation au couvercle relativement à la cuve dans un plan horizontal. Ce mouvement de rotation peut être imparti directement, en exerçant un effort approprié sur une poignée attachée de manière fixe au couvercle, ou indirectement, en appliquant un effort manuel de commande sur un organe de commande monté mobile sur le couvercle par l'intermédiaire d'un système de transformation de mouvement.

Ces autocuiseurs connus, particulièrement simples, robustes et bon marché, donnent généralement satisfaction, mais n'en présente pas moins certains inconvénients.

En particulier, on constate en pratique que la rotation du couvercle relativement à la cuve pour passer de la configuration de verrouillage à la configuration de déverrouillage (ou inversement) s'accompagne systématiquement ou presque de frottements parasites entre la cuve et le couvercle, qui entraînent un effort de réaction contrariant le mouvement de verrouillage ou de déverrouillage exercé par l'utilisateur sur le couvercle. Ces effets de frottement intempestif sont constatés non seulement lorsque le couvercle est doté d'une poignée fixe de manipulation, par l'intermédiaire de laquelle il est mis en rotation par l'utilisateur, mais également dans les modèles d'autocuiseurs plus élaborés mettant en œuvre un organe de commande mobile actionnable manuellement.

Cette résistance parasite à la rotation du couvercle s'avère en pratique extrêmement gênante pour les utilisateurs, notamment ceux dont la force physique est moindre. Ces frottements parasites sont également susceptibles de conduire à une sursollicitation mécanique des pièces concernées, et en particulier du mécanisme de transformation de mouvement permettant, lorsque l'autocuiseur en est équipé, de transformer le mouvement d'un organe de commande manuelle porté par le couvercle en mouvement de rotation du couvercle relativement à la cuve.

En définitive, les autocuiseurs à baïonnette actuels présentent une insuffisance en matière d'ergonomie et de confort d'utilisation, et un risque de défaillance potentiellement accrue, en raison de la survenance de frottements intempestifs comme décrit ci-avant.

Le document EP-3 329 810 A1 divulgue un autocuiseur à baïonnette dont le couvercle muni d'un verrou mobile radialement coopérant avec une conformation complémentaire de verrouillage portée par la cuve.

L'invention se propose par conséquent de remédier aux différents inconvénients exposés précédemment et de proposer un nouvel appareil de cuisson d'aliments sous pression qui présente non seulement une ergonomie et une facilité d'utilisation améliorées, mais s'avère en outre de conception extrêmement simple, fiable et bon marché.

Un autre objet de l'invention vise à proposer un nouvel appareil de cuisson d'aliments sous pression de construction compacte.

Un autre objet de l'invention vise à proposer un nouvel appareil de cuisson d'aliments sous pression particulièrement robuste.

Un autre objet de l'invention vise à proposer un nouvel appareil de cuisson d'aliments sous pression dont la conception permet de minimiser l'effort manuel exercé par un utilisateur pour commander le verrouillage ou le déverrouillage du couvercle relativement à la cuve.

Un autre objet de l'invention vise à proposer un nouvel appareil de cuissons d'aliments sous pression de construction extrêmement simple, mettant en oeuvre un minimum de pièces différentes, et de fabrication aisément industrialisable.

Les objets assignés à l'invention sont atteints à l'aide d'un appareil de cuisson d'aliments sous pression comportant une cuve métallique, un couvercle métallique indépendant de la cuve et destiné à être rapporté sur la cuve pour passer d'une configuration de déverrouillage dans laquelle le couvercle repose librement sur la cuve, à une configuration de verrouillage dans laquelle le couvercle est attaché à la cuve pour former avec elle une enceinte de cuisson apte à monter en pression, le passage de la configuration de déverrouillage à la configuration de verrouillage ou inversement impliquant au moins une rotation du couvercle selon un axe central de rotation alors qu'il repose sur la cuve, ledit couvercle étant également susceptible de subir, à l'occasion du passage de la configuration de déverrouillage à la configuration de verrouillage ou inversement, un déplacement en translation relativement à la cuve dans un plan perpendiculaire audit axe central de rotation, ledit appareil étant caractérisé en ce qu'il comprend au moins une première butée non métallique fixée à la cuve et disposée relativement au couvercle pour limiter la course dudit déplacement en translation du couvercle selon une première direction, par mise en appui du couvercle contre ladite première butée..

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

- La figure 1 illustre, selon une vue en perspective schématique, un appareil de cuisson d'aliments sous pression à verrouillage à baïonnette conforme à l'invention, avec le couvercle reposant librement sur la cuve en configuration de déverrouillage, l'appareil en question étant pourvu d'un organe de commande du verrouillage/déverrouillage mobile relativement au couvercle et se trouvant en l'espèce dans une position déployée correspondant au déverrouillage.

- La figure 2 illustre, selon une vue schématique en perspective plongeante, un sous-ensemble de cuve faisant partie de l'appareil de la figure 1, le sous-ensemble de cuve incluant une cuve métallique destinée à recevoir les aliments ainsi qu'une première et une deuxième poignée de cuve attachées à la cuve pour manipuler cette dernière.

- La figure 3 illustre un sous-ensemble de couvercle qui fait partie de l'autocuiseur de la figure 1, et qui est destiné à coopérer avec le sous-ensemble de cuve de la figure 2, ledit sous-ensemble de couvercle incluant non seulement un couvercle métallique mais également un support relativement auquel ledit couvercle peut pivoter, ainsi que l'organe de commande du verrouillage/déverrouillage qui est monté sur le support en question.

- La figure 4 illustre le sous-ensemble de couvercle de la figure 3 représenté sous un autre angle.

- La figure 5 illustre, selon une vue de dessus, l'appareil de cuisson de la figure 1 avec le couvercle rapporté sur la cuve et centré entre les poignées de cuves de manière à ne pas entrer en contact avec ces dernières.

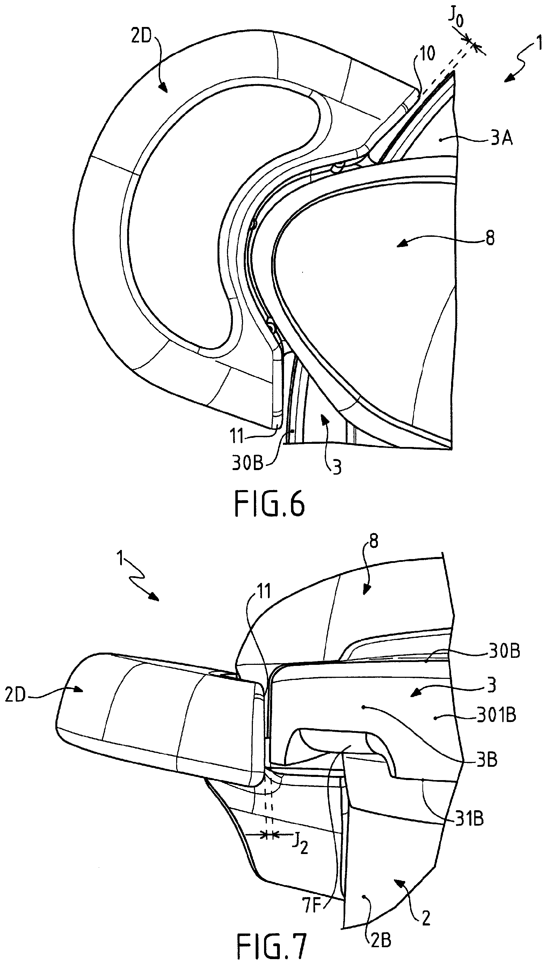

- Les figures 6 et 7 illustrent des détails de la figure 5, respectivement en vue de dessus et de côté.

- La figure 8 est une vue en coupe du détail de la figure 7.

- La figure 9 est une vue de dessus de l'autocuiseur des figures précédentes lors du passage de la configuration de déverrouillage à la configuration de verrouillage, le couvercle métallique venant en appui latéral contre la première butée solidaire de la première poignée de cuve, la vue de la figure 9 étant localement écorchée au niveau du couvercle pour permettre de visualiser une zone où un jeu est maintenu entre une rampe de cuve et le couvercle.

- La figure 10 est une vue agrandie d'un détail correspondant à la zone écorchée de la figure 9.

- La figure 11 est une vue de dessus de l'autocuiseur des figures précédentes pendant le passage de la configuration de verrouillage à la configuration de déverrouillage, le couvercle venant en appui latéral contre une deuxième butée solidaire de la première poignée de cuve.

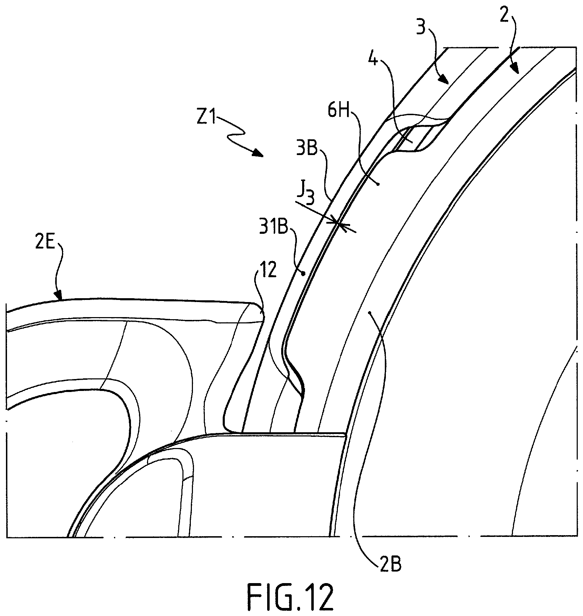

- La figure 12 est une vue de dessous de l'autocuiseur de la figure 11 montrant l'existence d'un jeu entre le couvercle et une rampe de cuve au voisinage d'une zone située de manière diamétralement opposée à la zone de contact entre le couvercle et la deuxième butée.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semiprofessionnels. L'appareil 1 conforme à l'invention est avantageusement conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comporte au moins une cuve métallique 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique réalisée, de préférence entièrement, en un matériau métallique, par exemple en acier inoxydable ou en aluminium, de préférence par emboutissage d'un flan discoïde en métal. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur 2C, qui est en l'espèce de forme circulaire, et qui délimite une ouverture d'accès à l'intérieur de la cuve 2. La conformation de ce bord supérieur 2C sera décrite plus en détails dans ce qui suit, en relation avec les moyens de verrouillage de l'appareil 1.

Avantageusement, et comme illustré aux figures, l'appareil de cuisson 1 comprend au moins une première poignée de cuve 2D fixée à ladite cuve pour permettre à un utilisateur de manipuler la cuve 2 par l'intermédiaire de ladite première poignée de cuve 2D. Cette dernière est fixée à ladite cuve 2 de façon à faire saillie extérieurement de cette dernière. Dans le mode de réalisation illustré aux figures, ladite première poignée de cuve 2D est montée sur la face externe de la paroi latérale 2B de la cuve 2, de façon à s'étendre radialement vers l'extérieur de la cuve 2 et à former ainsi une prise destinée à être attrapée manuellement par l'utilisateur pour manipuler la cuve 2 (par exemple pour la soulever et la déplacer). Dans le mode de réalisation illustré aux figures, l'appareil de cuisson 1 comprend également une deuxième poignée de cuve 2E, qui est de préférence identique à la première poignée de cuve 2D, lesdites première et deuxième poignées 2D, 2E étant avantageusement fixées sur la paroi latérale 2B de la cuve 2, de façon diamétralement opposée par rapport à l'axe central X-X', lesdites poignées de cuve 2D, 2E étant en l'espèce disposées à proximité du bord supérieur libre 2C de la cuve 2. Il est toutefois parfaitement envisageable que la cuve 2 ne soit munie que d'une seule poignée de cuve 2D, ou de plus de deux poignées de cuve (par exemple trois ou quatre), sans pour autant que l'on sorte du cadre de l'invention.

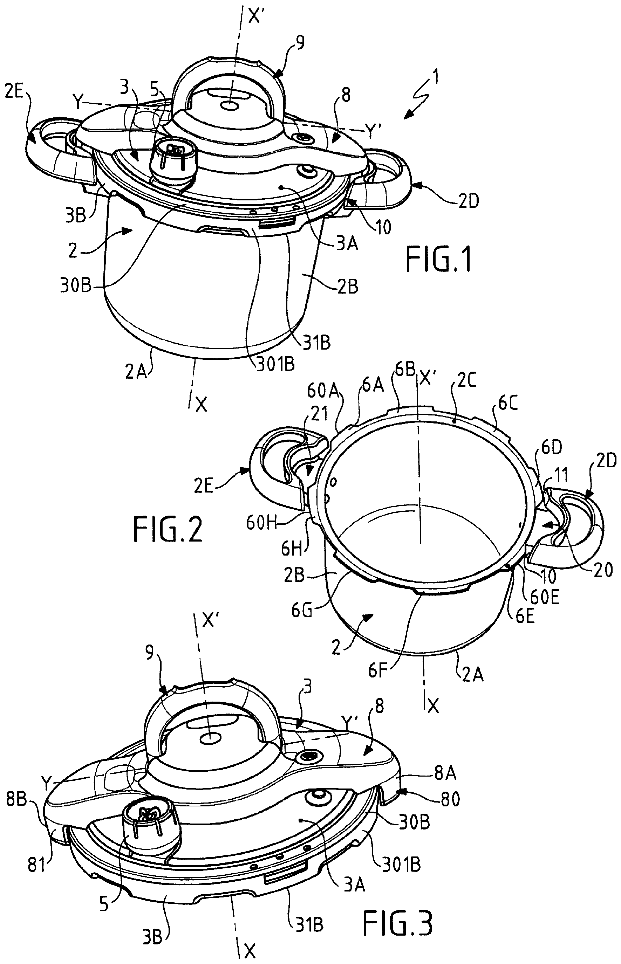

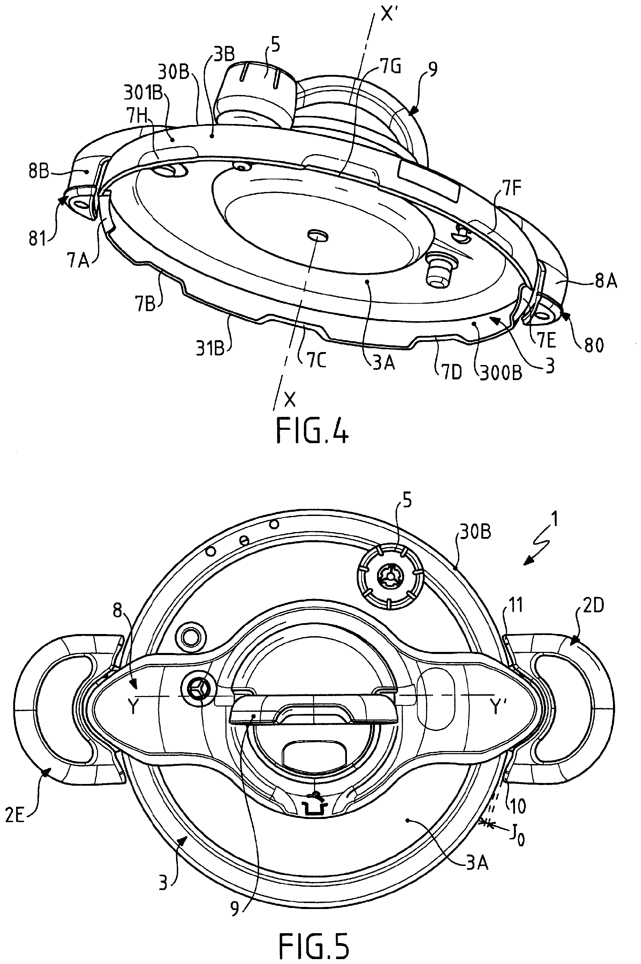

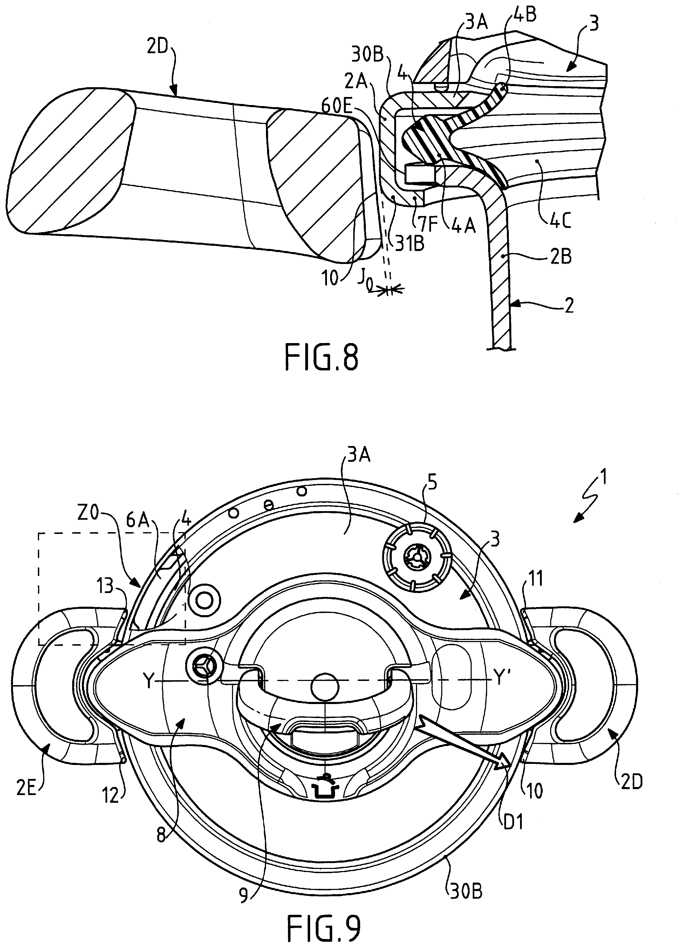

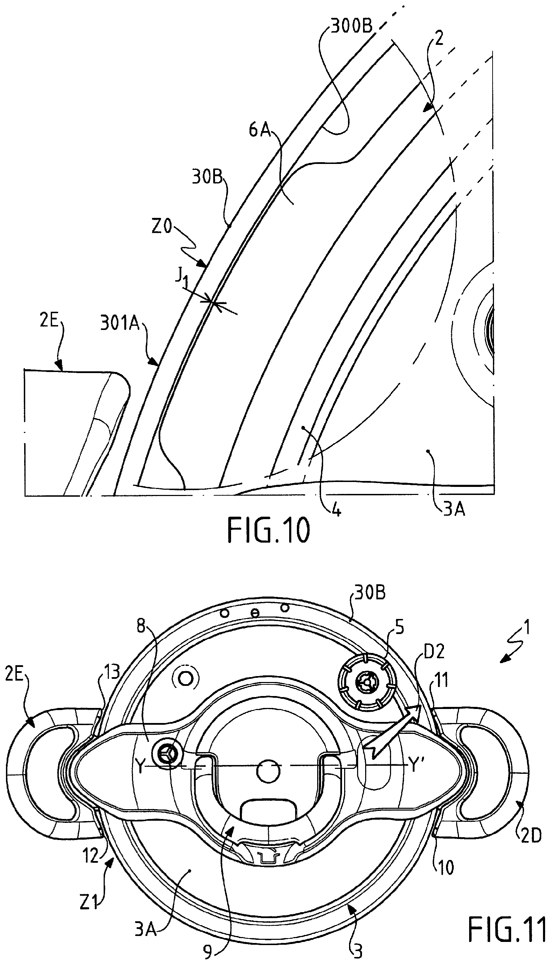

L'appareil 1 conforme à l'invention comprend également un couvercle métallique 3 indépendant de la cuve 2, c'est-à-dire qui n'est pas lié à la cuve 2 (notamment pas lié par une charnière), et peut être librement séparé de la cuve 2. Le couvercle 3 métallique indépendant est destiné à être rapporté sur la cuve 2, c'est-à-dire en l'espèce à venir coiffer cette dernière, pour passer d'une configuration de déverrouillage (illustrée aux figures 1 et 5) dans laquelle le couvercle 3 repose librement sur la cuve 2, à une configuration de verrouillage (illustré à la figure 11) dans laquelle le couvercle 3 est attaché à la cuve 2 pour former avec elle une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité, formée de préférence par un joint annulaire souple 4, en élastomère par exemple, destiné à être interposé entre le couvercle 3 et la cuve 2, pour empêcher ainsi toute fuite incontrôlée de vapeur et/ou d'air entre l'intérieur de l'enceinte et l'extérieur. Le joint 4 comporte par exemple un talon 4A à partir duquel s'étendent vers l'intérieur une lèvre supérieure 4B et une lèvre inférieure 4C (voir figure 8).

Le joint 4 est donc interposé entre la cuve 2 et le couvercle 3, de sorte que lorsque le couvercle 3 repose librement sur la cuve 2, en configuration de déverrouillage, ledit couvercle 3 repose plus précisément sur le joint 4 interposé entre la cuve 2 et le couvercle 3. Le couvercle 3 est de manière classique réalisé, de préférence entièrement, en un matériau métallique qui est de préférence le même que celui de la cuve 2, par exemple l'acier inoxydable ou l'aluminium. Le couvercle 3 présente avantageusement une forme conjuguée à celle de la cuve 2, par exemple une forme globalement discoïde, et s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans le mode de réalisation illustré aux figures, le couvercle 3 inclut un élément de couverture discoïde 3A, à partir de la périphérie duquel s'étend un bord tombant annulaire 3B. L'élément de couverture discoïde 3A est avantageusement de forme et dimensions conjuguées à celles de l'ouverture d'accès délimitée par le bord supérieur libre 2C de la paroi latérale annulaire 2B de la cuve 2, tandis que le bord tombant annulaire 3B forme une ceinture annulaire, par exemple de forme sensiblement cylindrique ou tronconique, qui s'élève entre un premier bord circulaire 30B solidaire de l'élément de couverture discoïde 3A (en l'espèce au niveau de la périphérie de ce dernier) et un second bord circulaire libre 31B. Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X'. Cela n'exclut bien entendu aucunement que l'élément de couverture discoïde 3A puisse être, tel qu'illustré aux figures, légèrement bombé ou incurvé localement, par exemple pour accueillir un mécanisme de commande. Dans ce mode de réalisation, le couvercle 3 est ainsi destiné à venir coiffer de façon sensiblement ajustée le sommet de la cuve 2, de sorte que le bord tombant annulaire 3B entoure par l'extérieur le sommet de la paroi latérale annulaire 2B et le bord supérieur libre 2C, tandis que l'élément de couverture discoïde 3A repose en appui sur la cuve 2 au niveau du bord libre 2C, par l'intermédiaire du joint d'étanchéité 4 interposé entre la cuve 2 et le couvercle 3.

La cuve 2 et le couvercle 3 constituent ainsi des enveloppes métalliques respectives complémentaires, qui une fois associées forment une enveloppe métallique résultante délimitant un volume fermé au sein duquel les aliments sont destinés à cuire sous pression de vapeur. A cette fin, l'appareil 1 de cuisson d'aliments sous pression conforme à l'invention comprend avantageusement un moyen de régulation de pression 5, comme par exemple une soupape, montée de préférence sur le couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, de préférence de l'ordre de 100 kPa. Le principe de fonctionnement général d'un tel moyen de régulation de pression est bien connu en tant que tel, de sorte qu'il n'est pas nécessaire de le décrire plus avant ici. L'appareil 1 de cuisson d'aliments sous pression peut comporter d'autres organes de fonctionnement (par exemple un moyen de sécurité à l'ouverture, une soupape de sécurité à la surpression, *etc.*).

L'appareil 1 conforme à l'invention est pourvu d'un système de verrouillage du couvercle 3 relativement à la cuve 2, afin de permettre à l'enceinte de cuisson formée par l'association de la cuve 2 et du couvercle 3 en configuration de verrouillage d'atteindre au moins la pression de fonctionnement susvisée, sans risque de voir le couvercle 3 échapper sous l'effet de la pression régnant au sein de l'enceinte. En d'autres termes, le système de verrouillage est conçu pour attacher, en configuration de verrouillage, le couvercle 3 à la cuve 2, en établissant une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson. De préférence, l'appareil 1 est pourvu d'un système de verrouillage à baïonnette qui inclut des rampes interverrouillables de cuve 6A - 6H et de couvercle 7A - 7H qui font respectivement partie de la cuve 2 et du couvercle 3. Ledit système de verrouillage à baïonnette est conçu, comme cela est bien connu en tant que tel, pour assurer le verrouillage et le déverrouillage du couvercle 3 relativement à la cuve 2 par pivotement du couvercle 3 relativement à la cuve 2 selon l'axe central X-X'. Ce pivotement peut faire ainsi passer l'appareil 1 d'une configuration d'attente de verrouillage (configuration de déverrouillage), dans laquelle le couvercle 3 est rapporté sur la cuve 2 et repose librement sur cette dernière, à la configuration de verrouillage précitée, dans laquelle la cuve 2 et le couvercle 3 interagissent, par l'intermédiaire de leurs rampes interverrouillables 6A - 6H, 7A - 7H respectives pour empêcher leur libre séparation, et inversement. Comme cela est bien connu en tant que tel, les rampes de cuve 6A - 6H et de couvercle 7A - 7H sont destinées à coopérer deux-à-deux, de sorte que chaque rampe 7A - 7H de couvercle est amenée, par rotation du couvercle 3 relativement à la cuve 2, à passer sous une excroissance correspondante de cuve 6A - 6H pour verrouiller le couvercle 3 relativement à la cuve 2. Dans le mode de réalisation illustré aux figures, les rampes 6A - 6H de cuve sont formées par un rebord annulaire qui déborde radialement vers l'extérieur à partir du bord supérieur 2C, des encoches étant ménagées à travers ledit rebord annulaire pour permettre le passage des rampes de couvercle 7A - 7H, de sorte que les portions dudit rebord annulaire qui s'étendent entre chaque encoche forment les rampes de cuves 6A - 6H respectives destinées à coopérer avec les rampes de couvercle 7A - 7H. Ainsi, lorsque le couvercle 3 vient coiffer la cuve 2, les rampes de couvercle 7A - 7H peuvent passer par les encoches pour se retrouver plus bas que le rebord annulaire précité. Il suffit ensuite de faire simplement tourner le couvercle 3 relativement à la cuve 2 selon l'axe central de rotation X-X' pour décaler angulairement les rampes de couvercle 7A - 7H et les encoches du rebord annulaire de la cuve 2, pour amener les rampes de couvercle 7A - 7H sous et contre les rampes de cuve 6A - 6H, réalisant de cette manière un verrouillage « *à baïonnette* ». Quant aux rampes de couvercles 7A - 7H, elles sont par exemple formées, comme cela est par ailleurs bien connu en tant que tel, par des languettes obtenues par repliement localisé vers l'intérieur du bord libre 31B du bord tombant annulaire 3B du couvercle 3. L'invention n'est toutefois pas limitée à la conformation spécifique des rampes de cuve 6A - 6H et de couvercle 7A - 7H décrite dans ce qui précède, et il est par exemple parfaitement envisageable de mettre en œuvre des rampes de couvercle 7A - 7H formées par des éléments volumiques emboutis, sans pour autant que l'on sorte du cadre de l'invention. L'invention n'est pas non plus limitée à un appareil 1 mettant en œuvre un système de verrouillage à baïonnette, et concerne tout appareil dans lequel le passage de la configuration de déverrouillage à la configuration de verrouillage ou inversement implique au moins une rotation du couvercle 3 alors qu'il repose sur la cuve 2.

Dans une telle conception basée sur une rotation du couvercle 3 pour passer de la configuration de déverrouillage à la configuration de verrouillage ou inversement, le couvercle 3 est également susceptible de subir, à l'occasion du passage de la configuration de déverrouillage à la configuration de verrouillage ou inversement, un déplacement en translation relativement à la cuve 2 dans un plan perpendiculaire audit axe central de rotation X-X'.

En d'autres termes, le couvercle 3, lorsqu'il est déplacé relativement à la cuve 2 entre les configurations de déverrouillage et de verrouillage, peut être susceptible de se déplacer en translation dans un plan horizontal perpendiculaire à l'axe central de rotation X-X', sous l'effet de la manipulation directe ou indirecte du couvercle 3 par l'utilisateur pour le faire passer d'une configuration à l'autre. La présence de ces mouvements parasites de translation du couvercle 3 dans un plan horizontal perpendiculaire à l'axe central de rotation X-X' est accentuée par le caractère relativement instable du positionnement du couvercle 3 sur la cuve 2 lorsque le couvercle 3 repose librement sur la cuve 2, en raison de la présence du joint souple 4 interposé entre la cuve 2 et le couvercle 3.

Dans le cas, non illustré aux figures, où le couvercle 3 est simplement doté d'une poignée de couvercle fixe, par l'intermédiaire de laquelle l'utilisateur peut imprimer au couvercle 3 un mouvement de rotation selon l'axe central X-X', les mouvements parasites de translation du couvercle 3 proviennent essentiellement de l'inévitable imperfection du mouvement imprimé manuellement par l'utilisateur au couvercle 3, mouvement qui inclut inévitablement une ou plusieurs composantes en translation.

Dans le mode de réalisation illustré aux figures, les mouvements parasites susceptibles d'être subis par le couvercle 3 entre ses configurations de déverrouillage et de verrouillage sont essentiellement impartis, de manière non souhaitée, par un mécanisme de commande manuelle du pivotement du couvercle 3 monté sur ce dernier. Plus précisément, dans le mode de réalisation avantageux illustré aux figures, l'appareil 1 comprend un support 8 auquel ledit couvercle 3 est attaché, en l'espèce de façon permanente, afin de former un sous-ensemble unitaire comprenant au moins lesdits support 8 et couvercle 3.

Comme cela ressortira plus en détails de ce qui suit, le couvercle 3 est attaché au support 8 de façon à être mobile relativement à ce dernier, et en particulier de façon à pouvoir pivoter relativement au support 8 selon ledit axe central X-X', selon une course angulaire correspondant à la course angulaire requise pour faire passer l'appareil 1 de sa configuration de déverrouillage (dans laquelle le couvercle 3 repose librement sur la cuve 2 par l'intermédiaire du joint 4) à sa configuration de verrouillage, et inversement. Avantageusement, le support 8 se présente, dans le mode de réalisation illustré aux figures, sous la forme d'une traverse, c'est-à-dire d'une pièce sensiblement allongée qui s'étend diamétralement sur le couvercle 3 et qui se prolonge en l'espèce à chacune de ses extrémités par des bords tombants respectifs 8A, 8B. Dans ce mode de réalisation, l'appareil 1 comprend en outre un organe de commande 9 du verrouillage/déverrouillage qui est d'une part attaché au support 8 par une liaison mécanique autorisant le déplacement manuel dudit organe de commande 9 relativement audit support 8, et d'autre-part connecté au couvercle 3 par un dispositif de transformation dudit déplacement manuel de l'organe de commande 9 en pivotement du couvercle 3 relativement au support 8 selon ledit axe central de rotation X-X'. L'organe de commande 9 est donc avantageusement conçu pour être manipulé par l'utilisateur, de façon à permettre à ce dernier de contrôler le système de verrouillage à baïonnette afin de pouvoir faire passer, par actionnement manuel de l'organe de commande 9, l'appareil 1 de sa configuration de déverrouillage (configuration d'attente de verrouillage) à sa configuration de verrouillage, et inversement. L'organe de commande 9 est attaché au support 8, en l'espèce de façon permanente, par une liaison mécanique autorisant le déplacement manuel de l'organe de commande 9 relativement au support 8. L'organe de commande 9 est par ailleurs connecté au couvercle 3 par le dispositif de transformation précité qui est conçu pour convertir le mouvement de l'organe de commande 9 en mouvement rotatif du couvercle 3 relativement au support 8, de sorte que l'utilisateur peut ainsi commander le verrouillage et le déverrouillage par pivotement du couvercle 3 relativement au support 8 par simple manipulation de l'organe de commande 9, sans que l'utilisateur n'ait à imprimer lui-même un mouvement de rotation au couvercle 3.

L'invention n'est pas limitée à un dispositif de transformation spécifique, et l'homme du métier pourra mettre en œuvre tout dispositif de transformation adapté, selon la nature du mouvement de l'organe de commande 9, en utilisant les composants mécaniques habituels (du genre : roues dentées, cames, leviers, biellettes, etc.) requis. L'invention est tout particulièrement adaptée à la mise en œuvre d'un organe de commande 9 mobile relativement au couvercle 3, car c'est dans ce cas de figure que des mouvements parasites de translation du couvercle 3, notamment dans le plan horizontal perpendiculaire à l'axe central de rotation X-X', sont particulièrement susceptibles d'être générés, sous l'effet de la manipulation indirecte du couvercle 3 par l'utilisateur, via l'organe de commande 9, pour le faire passer d'une configuration à l'autre. L'invention est donc particulièrement intéressante lorsque sont mis en œuvre un organe de commande 9 mobile relativement au couvercle 3 (et au support 8 en l'occurrence) et un dispositif de transformation du mouvement de l'organe de commande 9 en rotation du couvercle 3 selon l'axe central X-X'. Le dispositif de transformation en question inclut de préférence au moins une pièce mobile selon un mouvement présentant au moins une composante de translation horizontale, susceptible de favoriser en retour un déplacement parasite en translation horizontale du couvercle. Une telle configuration est avantageuse car elle permet une ergonomie de commande améliorée, avec une possibilité de démultiplication du mouvement de commande manuelle exercé sur l'organe de commande 9. Les effets indésirables liés à une telle conception (éventuels mouvements parasites du couvercle 3 dans le plan horizontal) sont avantageusement contrebalancés par la conception originale décrite dans ce qui suit.

Avantageusement, la liaison mécanique entre le support 8 et l'organe de commande 9 est conçu pour que le déplacement manuel de l'organe de commande 9 soit formé par au moins un déplacement en rotation de l'organe de commande 9 autour d'un axe de rotation Y-Y' parallèle à une direction sécante à l'axe central de rotation X-X' (comme illustré aux figures) et/ou par au moins un déplacement en translation de l'organe de commande 9 (mode de réalisation non représenté). Afin de sensiblement empêcher le support 8 de pouvoir pivoter relativement à la cuve 2 selon l'axe central de rotation X-X' lors dudit déplacement manuel de l'organe de commande 9, les support 8 et cuve 2 sont avantageusement conçus, comme illustré aux figures, pour interagir, lorsque le couvercle 3 est rapporté sur la cuve 2 pour former l'enceinte de cuisson. En d'autres termes, l'association du couvercle 3 et de la cuve 2 dans la configuration de déverrouillage illustrée par exemple à la figure 1 entraîne automatiquement un interverrouillage du support 8 et de la cuve 2, empêchant le support 8 de tourner selon l'axe central X-X' tout en reposant sur la cuve 2. Ce verrouillage de la position angulaire relative du support 8 et de la cuve 2 permet au support 8 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé à un état verrouillé et inversement. A cette fin, lesdits support 8 et cuve 2 sont pourvus respectivement d'au moins une première conformation de support 80 et d'au moins une première conformation de cuve 20 complémentaires destinées à coopérer par emboîtement lorsque le couvercle 3 est rapporté sur la cuve 2 pour former l'enceinte de cuisson (figure 1). Ledit emboîtement permet de verrouiller la position angulaire relative du support 8 et de la cuve 2 dans un plan perpendiculaire audit axe central de rotation X-X'. Dans le mode de réalisation illustré aux figures, la cuve 2 est pourvue de deux conformations de cuve 20, 21 disposées de manière diamétralement opposée relativement à l'axe vertical central X-X' et fixées sur la face externe de la paroi latérale 2B de la cuve 2, tandis que le support 8 comporte quant à lui deux conformations de support 80, 81 complémentaires disposées de manière diamétralement opposée sur le couvercle 3 relativement à l'axe vertical central X-X', lesdites conformations de support 80, 81 étant en l'espèce avantageusement disposées en regard de la face extérieure 301B du bord tombant annulaire 3B du couvercle 3. Dans le mode de réalisation illustré aux figures, la première conformation de support 80 est formée par le premier bord tombant 8A de la traverse constituant avantageusement le support 8, tandis que la deuxième conformation de support 81 est formée par le deuxième bord tombant 8B de la traverse en question. Quant à la première conformation de cuve 20 elle est avantageusement portée par ladite première poignée de cuve 2D, et est formée par exemple par un logement destiné à recevoir la première conformation de support 80 complémentaire. Une conception similaire est mise en oeuvre en ce qui concerne la deuxième conformation de cuve 21, destinée à recevoir la deuxième conformation de support 81, ladite deuxième conformation de cuve 20 étant de préférence portée par la deuxième poignée de cuve 2E. Le support 10, en ce compris ses bords tombants 8A, 8B formant respectivement les première et deuxième conformations de support 80, 81, de même que les première et deuxième poignées de cuves 2D, 2E formant les première et deuxième conformations de cuves 20, 21, sont avantageusement réalisées en matière plastique.

Chaque conformation de cuve 20, 21 forme ainsi préférentiellement un élément femelle tandis que chaque conformation de support 80, 81 forme un élément mâle complémentaire dudit élément femelle. Lorsque l'utilisateur rapporte le sous-ensemble de couvercle (formé par le couvercle 3, le support 8 et l'organe de commande 9) sur le sous-ensemble de cuves (formé par la cuve 2 et ses poignées 2D, 2E conformées pour constituer les première et deuxième conformations de cuve 20, 21), les bords tombants 8A, 8B du support 8 viennent se loger dans les logements complémentaires correspondant aux première et deuxième conformations de cuves 20, 21, le couvercle 3 reposant librement sur la cuve 2 par l'intermédiaire du joint d'étanchéité 4. Dans cette configuration de déverrouillage, illustré par la figure 1, le couvercle 3 est prêt à être verrouillé par manipulation de l'organe de commande 9.

Ce dernier se présente avantageusement sous la forme d'un élément rotatif du type poignée, levier, manette ou anse et/ou d'un élément coulissant tel qu'un bouton-poussoir, un curseur ou autre. Dans le mode de réalisation préférentiel illustré aux figures, l'organe de commande 9 se présente sous la forme d'une anse pivotante montée à rotation selon un axe radial Y-Y' perpendiculaire à l'axe vertical central X-X'. L'anse en question peut ainsi évoluer par rotation selon l'axe de rotation Y-Y' entre une position déployée (figure 1) correspondant à la configuration de déverrouillage, dans laquelle l'anse fait saillie verticalement au droit du couvercle 3 et du support 8, et une position rabattue (figure 11) correspondant au verrouillage dans laquelle l'anse formant l'organe de verrouillage 9 est rabattue vers le support 8 et le couvercle 3. La course angulaire de l'anse formant l'organe de commande 9 entre ses deux positions extrêmes est par exemple de l'ordre de 90°.

Le dispositif de transformation qui transforme le déplacement manuel de l'organe de commande 9 en pivotement du couvercle 3 relativement au support 8 selon ledit axe central de rotation X-X' est par exemple conforme à l'enseignement de l'un et/ou l'autre des demandes de brevets européens publiées sous les numéros suivants : EP- 3 100 652, EP-3 100 653, EP-3 100 654 et EP-3 100 655, et dont le contenu intégral est incorporé par référence. Le dispositif de transformation en question est basé en particulier, conformément à l'enseignement des demandes de brevets européens précitées, sur un système à cames et biellettes. La commande de la rotation du couvercle 3 relativement à la cuve 2, pour passer de la configuration de verrouillage à la configuration de déverrouillage ou inversement, entraîne en pratique non seulement la rotation du couvercle 3 relativement à la cuve 2 selon l'axe central de rotation X-X', mais également et simultanément un léger déplacement intempestif du sous-ensemble de couvercle, et donc du couvercle 3, en translation dans un plan perpendiculaire à l'axe central de rotation X-X', en raison de composantes parasites de déplacement imparties par la manipulation de l'organe de commande 9 et/ou le dispositif de transformation précité. En particulier ce dernier présente, lorsqu'il est conforme à l'enseignement des demandes de brevets européens mentionnées précédemment, un caractère non symétrique et déséquilibré entraînant l'apparition de légers efforts parasites en translation.

La coopération entre les conformations de support 80, 81 et de cuve 20, 21 est susceptible de limiter ces déplacements en translation parasite dans un plan perpendiculaire à l'axe central de rotation X-X', mais avec toutefois une efficacité très difficile à contrôler en raison notamment des multiples jeux à prendre en considération, compte-tenu de la multiplicité de pièces concernées dans la chaîne de cotes (cuve 2, poignées 2D, 2E, couvercle 3, support 8, organe de commande 9, joint 4, dispositif de transformation de mouvement incluant lui-même une multiplicité de pièces en mouvement...). Le déplacement intempestif du couvercle 3 en translation perpendiculairement à l'axe central de rotation X-X' dépend donc de toute la reprise de jeux de tous les composants mécaniques concernés, ce qui rend la maîtrise et la limitation de ce mouvement parasite en translation horizontale très difficiles, sinon impossibles en pratique.

Il résulte ainsi un risque de mise en contact localisé du couvercle 3 et de la cuve 2, et plus précisément de la face interne 300B du bord tombant 3B et du bord latéral libre des rampes de cuves 6A - 6H. Ce contact, même localisé, entraîne des frottements métal/métal qui nuisent au bon fonctionnement de l'organe de commande 9 et à l'ergonomie d'utilisation. L'utilisateur est en effet contraint, pour surmonter les forces de réaction résultant de ces frottements intempestifs métal/métal, d'exercer un effort supplémentaire pour verrouiller ou déverrouiller le couvercle 3 relativement à la cuve 2.

Afin de surmonter ce problème et limiter le risque de survenance de frottements métal/métal entre la cuve 3 et le couvercle 2, l'invention propose de limiter le déplacement du couvercle 3 par rapport au centre de l'appareil (matérialisé par l'axe vertical central X-X') dans le plan perpendiculaire à l'axe central de rotation X-X' lors de la manipulation de l'appareil 1 pour le faire passer de cette configuration de déverrouillage à sa configuration de verrouillage ou inversement. Pour cela, l'appareil 1 comprend au moins une première butée 10 non métallique fixée à la cuve 2 et disposée relativement au couvercle 3 pour limiter la course dudit déplacement en translation du couvercle 3 selon une première direction D1, par mise en appui du couvercle 3 contre ladite première butée 10. La première butée 10 est donc fixée à la cuve 2, c'est-à-dire qu'elle est attachée de manière permanente directement à la cuve 2, dans une position fixe par rapport à cette dernière. La position de la première butée 10 relativement à la cuve 2 est choisie pour que le couvercle, lorsqu'il se déplace en translation selon la première direction D1 dans un plan perpendiculaire à l'axe central de rotation X-X', vienne en contact direct contre ladite première butée 10 et soit ainsi empêché, par cette mise en butée, de poursuivre sa course en translation selon la première direction D1. Cette mise en appui du couvercle 3 contre la première butée 10 empêche ainsi le couvercle 3 de poursuivre sa translation et de venir localement directement en appui contre la cuve 2 selon un contact métal/métal. Plus précisément, la première butée 10 permet, lorsque le couvercle 3 se déplace en translation selon la première direction D1, d'empêcher le couvercle 3 de venir au contact direct de la cuve 2 dans un secteur angulaire de la cuve 2 qui est sensiblement diamétralement opposée au secteur angulaire où est positionné la première butée 10. De cette façon, lorsque le couvercle 3 subit, à l'occasion du passage de la configuration de déverrouillage à la configuration de verrouillage ou inversement, un déplacement en translation selon la première direction D1 dans le plan perpendiculaire à l'axe central de rotation X-X', le couvercle 2 viendra d'abord en contact avec la première butée 10, avant pouvoir de venir en contact avec la cuve 2 (ce que lui interdit en réalité la première butée 10).

Cela signifie que l'appareil 1 selon l'invention est capable de mettre en œuvre la séquence suivante :

- le couvercle 3 repose librement sur la cuve 2, de manière centrée de sorte qu'il ne se trouve sensiblement pas en contact avec la cuve 2 sur l'ensemble de son périmètre (figure 5) et qu'il n'est pas non plus en contact avec la première butée 10 (existence d'un jeu J0 non nul entre la première butée 10 et la face externe 301A du bord tombant annulaire 3B du couvercle 3);

- l'utilisateur entraîne le couvercle 3 en rotation pour passer de la configuration de déverrouillage à la configuration de verrouillage, ce qui entraîne simultanément un déplacement parasite en translation du couvercle 3 relativement à la cuve 2 selon la première direction D1, dans un plan perpendiculaire à l'axe central de rotation X-X' (figure 9);

- le couvercle 3 progresse alors en translation selon la direction D1 jusqu'à venir en butée contre la première butée 10, qui empêche le couvercle 3 de venir en contact, dans la zone diamétralement opposée Z0, avec la cuve 2 (existence d'un jeu J1 non nul entre la cuve 2 et la face interne 300B du bord tombant annulaire 3B du couvercle 3) ; le couvercle tourne concomitamment selon l'axe central de rotation X-X', tout en frottant contre ladite première butée 10 ; ce frottement est cependant beaucoup moins incommodant pour l'utilisateur que le frottement métal/métal rencontré dans l'art antérieur, car il génère une résistance à la rotation beaucoup plus faible en raison de la mise en contact de métal d'une part (le couvercle 3) et d'un matériau non métallique d'autre part (la première butée 10) ; l'invention permet donc d'éviter un contact métal/métal qui nuit à l'ergonomie et au bon fonctionnement de l'appareil 1.

Avantageusement, la première butée 10 est réalisée en matière plastique, ce qui permet un contact plastique/métal particulièrement avantageux sur le plan tribologique. Dans ce mode de réalisation préférentiel, illustré aux figures, le couvercle 3 en rotation frotte donc directement contre la première butée 10 en plastique, le contact métal/plastique minimisant les forces de réactions s'opposant au déplacement en rotation du couvercle 3 relativement à la cuve 2 selon l'axe central de rotation X-X'. L'invention n'est toutefois pas limitée à la mise en œuvre d'une première butée 10 en matière plastique, et d'autres matériaux synthétiques ou naturels peuvent parfaitement être envisagés sans pour autant que l'on sorte du cadre de l'invention. De façon préférentielle, la première butée 10 est réalisée en un matériau thermodurcissable, comme par exemple une résine phénol-formaldéhyde, telle que la Bakélite®, qui s'avère particulièrement avantageux sur le plan tribologique, notamment lorsque le couvercle 3 est réalisé en aluminium ou en acier inoxydable. Il est cependant tout à fait envisageable d'employer d'autres matériaux plastiques, comme par exemple un matériau thermoplastique, sans pour autant que l'on sorte du cadre de l'invention.

De préférence, la première butée 10, et plus précisément la surface de butée de cette dernière contre laquelle est destiné à venir en appui le couvercle 3, s'inscrit dans un cercle de diamètre d0 qui est lié au diamètre hors tout d1 du couvercle 3 (correspondant au diamètre du bord tombant cylindrique 3B) par la formule suivante :

$$d0 = n \times d1$$

où n est compris entre 1,002 et 1,01, de préférence entre 1,005 et 1,008, par exemple environ égal à 1,007, afin d'obtenir un jeu J0 entre la première butée 10 et le couvercle 3 en position centrée qui permettent d'obtenir l'effet recherché de limitation en translation.

L'invention a permis de mettre en évidence qu'un jeu J0 compris entre 0,2 mm et 1 mm, de préférence compris entre sensiblement 0,5 mm et 0,9 mm, par exemple égal à environ 0,8 mm, lorsque le couvercle se trouve dans la position centrée de la figure 5, permet de limiter de manière très significative le risque de frottement métal/métal entre la cuve 2 et le couvercle 3 et l'inconfort qui en résulte en matière d'utilisation.

De préférence, ladite première butée 10 non métallique présente une forme angulaire, c'est-à-dire une forme en « *coin* », saillante, pour favoriser un contact ponctuel entre lesdits première butée 10 non métallique et couvercle 3 métallique, ce qui limite les effets de freinage dus aux frottements.

Dans le mode de réalisation illustré aux figures, la première butée 10 est positionnée en regard dudit bord tombant annulaire 3B du couvercle 3, lorsque ce dernier est rapporté sur la cuve 2, pour que ladite limitation de la course soit obtenue par mise en appui dudit bord tombant annulaire 3B (métallique) contre la première butée 10 (non métallique). Le couvercle 3 est donc conçu, lorsqu'il subit le déplacement intempestif en translation dans le plan horizontal perpendiculaire à l'axe central de rotation X-X', pour que la face externe 301B de son bord tombant 3B vienne localement en appui contre la première butée 10. Ainsi, en configuration de déverrouillage, le bord tombant annulaire 3B du couvercle 3 est interposé localement entre d'une part la première butée 10, et d'autre part le bord le plus extérieur de la cuve 2, correspondant par exemple au bord libre 60E de l'une des languettes formant rampe de cuve 6E. Ainsi, lorsque l'utilisateur sollicite manuellement l'organe de commande 9, pour faire passer le couvercle 3 de l'une de ses configurations de déverrouillage ou verrouillage à l'autre, il va simultanément contraindre le couvercle 3 en translation selon la première direction D1, rapprochant ainsi localement, dans la zone Z0, la face interne 300B du bord tombant 3B et le bord libre 60A de la rampe de cuve 6A présente dans cette zone Z0. Toutefois, la face externe 301B du bord tombant 3B va venir en contact et en appui contre la première butée 10 avant que la face interne du bord tombant 3B ne puisse venir au contact du bord extérieur libre 60A de la rampe de cuve 6A, un jeu J1, par exemple compris entre 0,2 et 1 mm, de préférence entre 0,5 et 0,9 mm, étant ainsi maintenu localement entre la cuve 2 (et plus précisément la rampe de cuve 6A) et le couvercle 3 (et plus précisément la face interne 300B du bord tombant 3B). Un jeu radial, correspondant localement au jeu J1 précité, est ainsi ménagé entre le couvercle 3 et la cuve 2 lorsque le couvercle 3 repose sur la cuve 2 et est en appui contre la première butée 10.

Avantageusement, ladite première butée 10 non métallique est portée par ladite première poignée de cuve 2D, et de façon encore plus avantageuse ladite première butée 10 non métallique vient de matière avec ladite première poignée de cuve 2D. En d'autres termes, dans le mode de réalisation préférentiel illustré aux figures, l'appareil 1 comprend une seule et même pièce, qui joue à la fois le rôle de première poignée de cuve 2D et de première butée 10. Par exemple, la première poignée 2D présente une forme sensiblement annulaire avec une excroissance localisée formant ladite première butée 10 non métallique. De préférence, la première poignée 2D présente plus précisément une première portion arrondie formant moyen de préhension et destinée à être saisie à la main par l'utilisateur, cette première portion arrondie s'étendant entre deux extrémités reliées entre elles par une portion de garde, laquelle est incurvée pour délimiter le logement correspondant à la première conformation de cuve 20 évoquée précédemment. L'une des extrémités en question est dotée d'une excroissance en coin formant avantageusement la première butée 10. Bien évidemment, l'invention n'est absolument pas limitée à ce mode de réalisation particulière, et il est tout à fait envisageable que la première butée 10 soit formée non pas par une excroissance localisée, mais par un patin surfacique, qui donnerait toutefois de moins bons résultats car il ne favoriserait pas un contact ponctuel susceptible de limiter les frottements. Il est également parfaitement envisageable que la première butée 10 ne soit pas portée ou venue de matière avec la première poignée 2D, mais soit plutôt constituée par une pièce indépendante de la première poignée 2D, fixée de manière séparée sur la cuve 2 par tout moyen approprié (par exemple via un pontet soudé).

Dans le mode de réalisation préférentiel illustré aux figures, l'appareil 1 comprend avantageusement au moins une deuxième butée 11, de préférence elle aussi non métallique, fixée à la cuve 2 et disposée relativement au couvercle 3 pour limiter la course dudit déplacement translation du couvercle 3 selon une deuxième direction D2 sécante avec ladite première direction D1, par mise en appui du couvercle 3 contre ladite deuxième butée 11. La deuxième butée 11 est donc conçue pour avantageusement jouer le même rôle que la première butée 10, à la seule différence près que ce rôle s'exerce pour limiter le déplacement en translation du couvercle 3 selon la deuxième direction D2. La description qui précède concernant la première butée 10 est donc valable, *mutatis mutandis,* pour la deuxième butée 11. La mise en œuvre de deux butées 10, 11 est particulièrement préféré car elle permet de tenir compte du fait que le déplacement intempestif en translation du couvercle 3 n'est pas forcément le même dans le sens du verrouillage que dans le sens du déverrouillage. Par exemple, dans le mode de réalisation illustré aux figures, les premières et deuxième directions D1, D2 forment entre elles un angle saillant compris entre 10 et 45 degrés, de préférence compris entre 20 et 30 degrés.

Avantageusement, la deuxième butée 11 non métallique est en matière plastique, et est également portée par la première poignée de cuve 2D, et vient de façon encore plus préférentielle également de matière avec ladite première poignée de cuve 2D, tout comme la première butée 10. Dans ce mode de réalisation particulièrement avantageux, la première poignée de cuve 2D présente avantageusement une forme sensiblement symétrique, chaque extrémité de la portion de garde qui relie les extrémités de la portion courbe de préhension manuelle étant pourvue d'une excroissance localisée, en forme de coin, constituant respectivement la première butée 10 et la deuxième butée 11. De préférence, la deuxième butée 11, et plus précisément la surface de butée de cette dernière contre laquelle est destiné à venir en appui le couvercle 3, s'inscrit dans le cercle de diamètre d0 évoqué précédemment.

De manière particulièrement avantageuse, la deuxième poignée 2E est identique à la première poignée 2D, et est disposée sur la cuve 2de manière diamétralement opposée, en miroir, relativement à la première poignée 2D. Afin d'autoriser un positionnement du sous-ensemble de couvercle dans un sens ou dans l'autre, la deuxième poignée de cuve 2E porte elle aussi des excroissances localisées en forme de coin 12, 13 susceptibles de jouer le rôle des première et deuxième butées 10, 11 lorsque le couvercle 3 repose sur la cuve 2 dans une position décalée de 180° par rapport à la position illustrée aux figures 1, 5, 9 et 11. Il est cependant parfaitement envisageable de mettre en œuvre une conception non symétrique du support 8, auquel cas le couvercle 3 ne peut être rapporté sur la cuve 2 que dans une unique position, ce qui rend inutile de recourir à des excroissances additionnelles 12, 13 susceptibles de jouer le rôle de première et deuxième butée 10, 11. La présence de quatre excroissances formant butées 10, 11, 12, 13, toutes inscrites sur un même cercle de diamètre d0 satisfaisant la formule précitée, permet avantageusement de contribuer à un autocentrage précis du couvercle 3, en complément de la coopération des conformations de cuve 20, 21 et de support 80, 81 évoquée précédemment.

Le fonctionnement de l'appareil de cuisson 1 illustré aux figures va maintenant être décrit brièvement. L'utilisateur remplit tout d'abord la cuve 2 illustrée à la figure 2 d'aliments à cuire, incluant un liquide de cuisson (eau par exemple). L'utilisateur saisit ensuite le sous-ensemble de couvercle illustré à la figure 3 par l'anse formant l'organe de commande 9 et rapporte le couvercle 3 sur la cuve 2, de sorte que le couvercle 3 repose librement sur la cuve 2 dans une configuration de déverrouillage illustré notamment aux figures 1 et 5. L'utilisateur exerce alors un effort manuel sur l'organe de commande 9 pour le rabattre vers le couvercle 3 afin de verrouiller le couvercle 3 relativement à la cuve 2, c'est-à-dire pour passer de la configuration de déverrouillage à la configuration de verrouillage. L'exercice de cet effort manuel entraîne les phénomènes sensiblement concomitants ou successifs, suivants :

- Le couvercle 3 tourne autour de l'axe central de rotation X-X' en direction de la configuration de verrouillage.

- Le couvercle 3 se déplace légèrement, de manière parasite, en translation selon la première direction D1, dans un plan perpendiculaire à l'axe central de rotation X-X', jusqu'à venir en butée contre la première butée 10, comme illustré à la figure 9. Le jeu J0 devient donc nul. Cette mise en butée permet d'empêcher la face interne 300B du bord tombant annulaire 3B du couvercle 3 de venir frotter latéralement contre le bord libre 60A de la rampe de cuve 6A, un jeu non nul J1, de l'ordre par exemple d'environ 0,8 mm, étant maintenu dans la zone Z0 diamétralement opposée à la zone où la face externe 301B du bord tombant annulaire 3B vient en appui contre la première butée 10.

L'appareil 1 se trouve alors en configuration de verrouillage et peut monter en pression et en température pour cuire les aliments.

À la fin du cycle de cuisson, l'utilisateur exerce sur l'organe de commande 9 une traction manuelle visant à relever l'organe de commande manuelle 9 pour déverrouiller le couvercle 3 relativement à la cuve 2. Cette opération entraîne les deux phénomènes sensiblement concomitants suivants :

- Le couvercle 3 tourne autour de l'axe central de rotation X-X' en direction de la configuration de déverrouillage.

- Le couvercle 3 se déplace légèrement, de manière parasite, en translation selon la deuxième direction D2, dans un plan perpendiculaire à l'axe central de rotation X-X', jusqu'à venir en butée contre la deuxième butée 11, comme illustré à la figure 11. Le jeu J2 devient donc nul. Cette mise en butée permet d'empêcher la face interne 300B du bord tombant annulaire 3B du couvercle 3 de venir frotter latéralement contre le bord libre 60H de la rampe de cuve 6H, un jeu non nul J13, de l'ordre par exemple de 0,8 mm, étant maintenu dans la zone diamétralement opposée à la zone où la face externe 301B du bord tombant annulaire 3B vient en appui contre la deuxième butée 11.

L'invention permet ainsi de limiter drastiquement les contacts métal/métal au verrouillage comme au déverrouillage, ce qui contribue à améliorer considérablement l'ergonomie de fonctionnement et la fiabilité de l'appareil 1.

**Revendications**

1. Appareil (1) de cuisson d'aliments sous pression comportant une cuve (2) métallique, un couvercle (3) métallique indépendant de la cuve (2) et destiné à être rapporté sur la cuve (2) pour passer d'une configuration de déverrouillage dans laquelle le couvercle (3) repose librement sur la cuve (2), à une configuration de verrouillage dans laquelle le couvercle (3) est attaché à la cuve (2) pour former avec elle une enceinte de cuisson apte à monter en pression, le passage de la configuration de déverrouillage à la configuration de verrouillage ou inversement impliquant au moins une rotation du couvercle (3) selon un axe central de rotation (X-X') alors qu'il repose sur la cuve (2), ledit couvercle (3) étant également susceptible de subir, à l'occasion du passage de la configuration de déverrouillage à la configuration de verrouillage ou inversement, un déplacement en translation relativement à la cuve (2) dans un plan perpendiculaire audit axe central de rotation (X-X'), ledit appareil étant **caractérisé en ce qu'**il comprend au moins une première butée (10) non métallique fixée à la cuve (2) et disposée relativement au couvercle (3) pour limiter la course dudit déplacement en translation du couvercle selon une première direction (D1), par mise en appui du couvercle (3) contre ladite première butée (10).

2. Appareil (1) de cuisson d'aliments sous pression selon la revendication 1 **caractérisé en ce qu'**il est pourvu d'un système de verrouillage à baïonnette qui inclut des rampes interverrouillables de cuve (6A-6H) et de couvercle (7A-7H).

3. Appareil (1) de cuisson d'aliments sous pression selon l'une quelconque des revendications précédentes **caractérisé en ce qu'**il comprend au moins une première poignée de cuve (2D) fixée à ladite cuve (2) pour permettre à un utilisateur de manipuler la cuve (2) par l'intermédiaire de ladite première poignée de cuve (2D), ladite première butée (10) non métallique étant portée par ladite première poignée de cuve (2D).

4. Appareil (1) de cuisson d'aliments sous pression selon la revendication précédente **caractérisé en ce que** ladite première butée (10) non métallique vient de matière avec ladite première poignée de cuve (2D).

5. Appareil (1) de cuisson d'aliments sous pression selon l'une quelconque des revendications précédentes **caractérisé en ce que** ladite première butée (10) non métallique présente une forme angulaire pour favoriser un contact ponctuel entre lesdits première butée (10) non métallique et couvercle (3).

6. Appareil (1) de cuisson d'aliments sous pression selon les revendications 4 et 5 **caractérisé en ce que** ladite première poignée (2D) présente une forme sensiblement annulaire avec une excroissance localisée formant ladite première butée (10) non métallique.

7. Appareil (1) de cuisson d'aliments sous pression selon l'une quelconque des revendications précédentes **caractérisé en ce que** ledit couvercle (3) comprend un élément de couverture discoïde (3A) à partir de la périphérie duquel s'étend un bord tombant annulaire (3B), ladite première butée (10) non métallique étant positionnée en regard dudit bord tombant annulaire (3B) lorsque le couvercle (3) est rapporté sur la cuve (2), pour que ladite limitation de la course soit obtenue par mise en appui dudit bord tombant annulaire (3B) contre ladite première butée (10).

8. Appareil (1) de cuisson d'aliments sous pression selon l'une quelconque des revendications précédentes **caractérisé en ce qu'**il comprend un support (8) auquel ledit couvercle (3) est attaché, et **en ce qu'**il comprend en outre un organe de commande (9) du verrouillage/déverrouillage qui est d'une part attaché audit support par une liaison mécanique autorisant le déplacement manuel dudit organe de commande (9) relativement audit support (8), et d'autre part connecté au couvercle (3) par un dispositif de transformation dudit déplacement manuel de l'organe de commande (9) en pivotement du couvercle (3) relativement au support (8) selon ledit axe central de rotation (X-X').

9. Appareil (1) de cuisson d'aliments sous pression selon la revendication précédente **caractérisé en ce que** ladite liaison mécanique est conçue pour que ledit déplacement manuel de l'organe de commande (9) soit formé par au moins un déplacement en rotation de l'organe de commande (9) autour d'un axe de rotation (Y-Y') parallèle à une direction sécante à l'axe central de rotation (X-X') et/ou par au moins un déplacement en translation de l'organe de commande (9).

10. Appareil (1) de cuisson d'aliments sous pression selon l'une quelconque des revendications 8 et 9 **caractérisé en ce que** lesdits support (8) et cuve (2) sont conçus pour interagir, lorsque le couvercle (3) est rapporté sur la cuve (2) pour former l'enceinte de cuisson, afin de sensiblement empêcher le support (8) de pouvoir pivoter relativement à la cuve (2) selon ledit axe central de rotation (X-X') lors du déplacement manuel de l'organe de commande (9).

11. Appareil (1) de cuisson d'aliments sous pression selon la revendication précédente **caractérisé en ce que** lesdits support (8) et cuve (2) sont pourvues respectivement d'au moins une première conformation de support (80, 81) et d'au moins une première conformation de cuve (20, 21) complémentaires destinées à coopérer par emboîtement lorsque le couvercle (3) est rapporté sur la cuve (2) pour former l'enceinte de cuisson, ledit emboîtement permettant de verrouiller la position angulaire relative du support (8) et de la cuve (2) dans un plan perpendiculaire audit axe central de rotation (X-X').

12. Appareil (1) de cuisson d'aliments sous pression selon les revendications 3 et 11 **caractérisé en ce que** ladite première conformation de cuve (2) est portée par ladite première poignée de cuve (2D).

13. Appareil (1) de cuisson d'aliments sous pression selon la revendication 11 ou 12 **caractérisé en ce que** chaque conformation de cuve (20, 21) forme un élément femelle tandis que chaque conformation de support (80, 81) forme un élément mâle complémentaire dudit élément femelle.

14. Appareil (1) de cuisson d'aliments sous pression selon l'une des revendications précédentes **caractérisé en ce qu'**un jeu radial (J1) est ménagé entre le couvercle (3) et la cuve (2) lorsque le couvercle (3) repose sur la cuve (2) et est en appui contre la première butée (10).

15. Appareil (1) de cuisson d'aliments sous pression selon l'une des revendications 3 ou 4 **caractérisé en ce qu'**il comprend au moins une deuxième butée (11) non métallique fixée à la cuve (2) et disposée relativement au couvercle (3) pour limiter la course dudit déplacement en translation du couvercle (3) selon une deuxième direction (D2) sécante avec ladite première direction, par mise en appui du couvercle (3) contre ladite deuxième butée (11), cette dernière étant également portée par ladite première poignée de cuve (2D).

**Patentansprüche**

1. Gerät (1) zum Druckgaren von Nahrungsmitteln mit einem metallischen Behälter (2), einem metallischen Deckel (3), der vom Behälter (2) unabhängig ist und dazu bestimmungsgemäß dafür vorgesehen ist, auf den Behälter (2) aufgesetzt zu werden und von einer Entriegelungskonfiguration, in der der Deckel (3) frei auf dem Behälter (2) liegt in eine Verriegelungskonfiguration überführt werden kann, in der der Deckel (3) an dem Behälter (2) zur Bildung eines, für eine Druckerhöhung geeigneten Garraums befestigt ist, wobei der Übergang von der Entriegelungskonfiguration zur Verriegelungskonfiguration oder umgekehrt mindestens eine Drehung des Deckels (3) um eine zentrale Drehachse (X-X') beinhaltet, während er auf dem Behälter (2) liegt, wobei der Deckel (3) beim Übergang von der Entriegelungskonfiguration zur Verriegelungskonfiguration oder umgekehrt auch eine Translationsbewegung in Bezug auf den Behälter (2) in einer Ebene senkrecht zur zentralen Drehachse (X-X') ausführen kann, wobei das Gerät **dadurch gekennzeichnet ist, dass** es mindestens einen ersten nichtmetallischen Anschlag (10) umfasst, der am Behälter (2) befestigt und relativ zum Deckel (3) angeordnet ist, um den Hub der Translationsbewegung des Deckels in einer ersten Richtung (D1) zu begrenzen, indem der Deckel (3) gegen den ersten Anschlag (10) gedrückt wird.

2. Gerät (1) zum Druckgaren von Nahrungsmitteln nach Anspruch 1, **dadurch gekennzeichnet, dass** es mit einem Bajonettverschlusssystem versehen ist, das verriegelbare Rampen für den Behälter (6A-6H) und den Deckel (7A-7H) aufweist.

3. Gerät (1) zum Druckgaren von Nahrungsmitteln nach einem der vorhergehenden Ansprüche, **dadurch gekennzeichnet, dass** es mindestens einen ersten Behältergriff (2D) umfasst, der an dem Behälter (2) befestigt ist, um es einem Benutzer zu ermöglichen, den Behälter (2) über den ersten Behältergriff (2D) zu bedienen, wobei der erste nichtmetallische Anschlag (10) von dem ersten Behältergriff (2D) getragen ist.

4. Gerät (1) zum Druckgaren von Nahrungsmitteln nach dem vorhergehenden Anspruch, **dadurch gekennzeichnet, dass** der erste nichtmetallische Anschlag (10) einstückig mit dem ersten Behältergriff (2D) ausgebildet ist.

5. Gerät (1) zum Druckgaren von Nahrungsmitteln nach einem der vorhergehenden Ansprüche, **dadurch gekennzeichnet, dass** der erste nichtmetallische Anschlag (10) zur Ermöglichung eines Punktkontakts zwischen dem ersten nichtmetallischen Anschlag (10) und dem Deckel (3) eine Winkelform aufweist.

6. Gerät (1) zum Druckgaren von Nahrungsmitteln nach den Ansprüchen 4 und 5, **dadurch gekennzeichnet, dass** der erste Griff (2D) eine im Wesentlichen ringförmige Form mit einer den ersten nichtmetallischen Anschlag (10) bildenden lokalen Ausstülpung aufweist.

7. Gerät (1) zum Druckgaren von Nahrungsmitteln nach einem der vorhergehenden Ansprüche, **dadurch gekennzeichnet, dass** der Deckel (3) ein scheibenförmiges Abdeckelement (3A) aufweist, von dessen Umfang aus sich ein ringförmiger, nach unten gerichteter Rand (3B) erstreckt, wobei der erste nichtmetallische Anschlag (10) gegenüber dem ringförmigen, nach unten gerichteten Rand (3B) positioniert ist, wenn der Deckel (3) auf den Behälter (2) aufgesetzt ist, um die Begrenzung des Hubs durch Abstützen des ringförmigen, nach unten gerichteten Rands (3B) gegen den ersten Anschlag (10) zu erzielen.

8. Gerät (1) zum Druckgaren von Nahrungsmitteln nach einem der vorhergehenden Ansprüche, **dadurch gekennzeichnet, dass** es einen Träger (8) aufweist, an dem der Deckel (3) befestigt ist und dass es weiterhin ein Steuerorgan (9) für die Verriegelung/Entriegelung aufweist, das einerseits durch eine mechanische Verbindung an dem Träger befestigt ist, die die manuelle Verschiebung des Steuerorgans (9) relativ zu dem Träger (8) zulässt, und das andererseits mit dem Deckel (3) durch eine Vorrichtung zur Umwandlung der manuellen Verlagerung des Steuerorgans (9) in ein Schwenken des Deckels (3) relativ zum Träger (8) gemäß der zentralen Drehachse (X-X') verbunden ist.

9. Gerät (1) zum Druckgaren von Nahrungsmitteln nach dem vorhergehenden Anspruch, **dadurch gekennzeichnet, dass** die mechanische Verbindung so ausgelegt ist, dass die manuelle Bewegung des Steuerorgans (9) durch mindestens eine Drehbewegung des Steuerorgans (9) um eine Drehachse (Y-Y'), die parallel zu einer die zentrale Drehachse (X-X') schneidenden Richtung verläuft, und/oder durch mindestens eine Translationsbewegung des Steuerorgans (9) gebildet ist.

10. Gerät (1) zum Druckgaren von Nahrungsmitteln nach einem der Ansprüche 8 oder 9, **dadurch gekennzeichnet, dass** der Träger (8) und der Behälter (2) so gestaltet sind, dass sie, wenn der Deckel (3) zur Bildung des Garraums auf den Behälter (2) aufgesetzt ist, zusammenwirken, um im Wesentlichen zu verhindern, dass der Träger (8) relativ zum Behälter (2) um die zentrale Drehachse (X-X') bei der manuellen Bewegung des Steuerorgans (9) schwenken kann.

11. Gerät (1) zum Druckgaren von Nahrungsmitteln nach dem vorhergehenden Anspruch, **dadurch gekennzeichnet, dass** der Träger (8) und der Behälter (2) jeweils mit mindestens einer ersten Trägerform (80, 81) und mindestens einer ersten Behälterform (20, 21) versehen sind, die dazu bestimmt sind, durch Ineinandergreifen zusammenzuwirken um den Garraum zu bilden wenn der Deckel (3) auf den Behälter (2) aufgesetzt wird, wobei es das Ineinandergreifen ermöglicht, die relative Winkelposition des Trägers (8) und des Behälters (2) in einer Ebene senkrecht zu der zentralen Drehachse (X-X') zu verriegeln.

12. Gerät (1) zum Druckgaren von Nahrungsmitteln nach den Ansprüchen 3 und 11, **dadurch gekennzeichnet, dass** die erste Konfiguration des Behälters (2) von dem ersten Behältergriff (2D) getragen ist.

13. Gerät (1) zum Druckgaren von Nahrungsmitteln nach Anspruch 11 oder 12, **dadurch gekennzeichnet, dass** jede Konfiguration des Behälters (20, 21) ein weibliches Element umfasst, während jede Konfiguration des Trägers (80, 81) ein zu dem weiblichen Element komplementäres männliches Element umfasst.

14. Gerät (1) zum Druckgaren von Nahrungsmitteln nach einem der vorhergehenden Ansprüche, **dadurch gekennzeichnet, dass** bei auf dem Behälter (2) ruhendem und gegen den ersten Anschlag (10) anliegendem Deckel (3) zwischen dem Deckel (3) und dem Behälter (2) ein radiales Spiel (J1) vorhanden ist.

15. Gerät (1) zum Druckgaren von Nahrungsmitteln nach einem der Ansprüche 3 oder 4, **dadurch gekennzeichnet, dass** es mindestens einen zweiten nichtmetallischen Anschlag (11) aufweist, der am Behälter (2) befestigt und relativ zum Deckel (3) angeordnet ist, um den Hub der translatorischen Verlagerung des Deckels (3) in einer die erste Richtung schneidenden zweiten Richtung (D2) durch Abstützen des Deckels (3) gegen den zweiten Anschlag (11) zu begrenzen, wobei letzterer auch vom ersten Behältergriff (2D) getragen wird.

**Claims**

1. A cooking utensil (1) for cooking food under pressure, which cooking utensil comprises a metal vessel (2), a metal lid (3) that is independent from the vessel (2) and that is designed to be mounted on the vessel (2) to go from an unlocked configuration, in which the lid (3) rests freely on the vessel (2), to a locked configuration, in which the lid (3) is attached to the vessel (2) to form therewith a cooking enclosure that is suitable for allowing pressure to build up inside it, going from the unlocked configuration to the locked configuration and vice versa involving at least a movement in rotation of the lid (3) about a central axis of rotation (X-X') while it is resting on the vessel (2), it also being possible, while going from the unlocked configuration to the locked configuration and vice versa, for said lid (3) to perform a movement in translation relative to the vessel (2) in a plane that is perpendicular to said central axis of rotation (X-X'), said cooking utensil being **characterized in that** it further comprises at least a first non-metal abutment (10) fastened to the vessel (2) and disposed relative to the lid (3) to limit the stroke of said movement in translation of the lid in a first direction (D1), by the lid (3) being brought to bear against said first abutment (10).

2. A cooking utensil (1) for cooking food under pressure according to claim 1, **characterized in that** it is provided with a bayonet-fitting locking system that includes interlockable vessel ramps (6A-6H) and lid ramps (7A-7H).

3. A cooking utensil (1) for cooking food under pressure according to either preceding claim, **characterized in that** it further comprises at least a first vessel handle (2D) fastened to said vessel (2) for enabling a user to manipulate the vessel (2) via said first vessel handle (2D), said first non-metal abutment (10) being carried by said first vessel handle (2D).

4. A cooking utensil (1) for cooking food under pressure according to the preceding claim, **characterized in that** said first non-metal abutment (10) is formed integrally with said first vessel handle (2D).

5. A cooking utensil (1) for cooking food under pressure according to any preceding claim, **characterized in that** said first non-metal abutment (10) has an angular shape to facilitate point contact between said first non-metal abutment (10) and the lid (3).

6. A cooking apparatus (1) for cooking food under pressure according to claims 4 and 5, **characterized in that** said first handle (2D) is of substantially annular shape with a localized projection forming said first non-metal abutment (10).

7. A cooking utensil (1) for cooking food under pressure according to any preceding claim, **characterized in that** said lid (3) comprises a disk-shaped lid element (3A) from the periphery of which an annular dropped edge (3B) extends, said first non-metal abutment (10) being positioned facing said annular dropped edge (3B) when the lid (3) is mounted on the vessel (2), so that said limiting of the stroke is obtained by said annular dropped edge (3B) being brought to bear against said first abutment (10).

8. A cooking utensil (1) for cooking food under pressure according to any preceding claim, **characterized in that** it further comprises a support (8) to which said lid (3) is attached, and **in that** it further comprises a locking/unlocking control member (9) that is firstly attached to said support by a mechanical coupling allowing said control member (9) to be moved manually relative to said support (8), and secondly connected to the lid (3) via a transformation device for transforming said manual movement of the control member (9) into turning of the lid (3) relative to the support (8) about said central axis of rotation (X-X').

9. A cooking utensil (1) for cooking food under ,pressure according to the preceding claim, **characterized in that** said mechanical coupling is designed so that said manual movement of the control member (9) is formed by at least one movement in rotation of the control member (9) about an axis of rotation (Y-Y') parallel to a direction intersecting the central axis of rotation (X-X') and/or by at least one movement in translation of the control member (9).

10. A cooking utensil (1) for cooking food under pressure according to claim 8 or claim 9, **characterized in**

**that** said support (8) and said vessel (2) are designed to interact, when the lid (3) is mounted on the vessel (2) to form the cooking enclosure, in order substantially to prevent the support (8) from being able to turn relative to the vessel (2) about said central axis of rotation (X-X') while the control member (9) is being moved manually.

11. A cooking utensil (1) for cooking food under pressure according to the preceding claim, **characterized in that** said support (8) and said vessel (2) are provided respectively with at least one first support shaped portion (80, 81) and with at least one first vessel shaped portion (20, 21) that are mutually complementary and designed to co-operate by interfitting engagement when the lid (3) is mounted on the vessel (2) to form the cooking enclosure, said interfitting engagement making it possible to lock the relative angular position of the support (8) and of the vessel (2) in a plane that is perpendicular to said central axis of rotation (X-X').

12. A cooking utensil (1) for cooking food under pressure according to claims 3 and 11, **characterized in that** said first vessel shaped portion (2) is carried by said first vessel handle (2D).

13. A cooking utensil (1) for cooking food under pressure according to claim 11 or claim 12, **characterized in that** each vessel shaped portion (20, 21) forms a female element while each support shaped portion (80, 81) forms a male element complementary to said female element.

14. A cooking utensil (1) for cooking food under pressure according to any preceding claim, **characterized in that** radial clearance (J1) is provided between the lid (3) and the vessel (2) when the lid (3) is resting on the vessel (2) and is bearing against the first abutment (10).

15. A cooking utensil (1) for cooking food under pressure according to claim 3 or claim 4, **characterized in that** it further comprises at least a second non-metal abutment (11) fastened to the vessel (2) and disposed relative to the lid (3) to limit the stroke of said movement in translation of the lid (3) in a second direction (D2) intersecting said first direction, by the lid (3) being brought to bear against said second abutment (11), said second abutment also being carried by said first vessel handle (2D).

FIG.1

FIG.2

FIG.3

FIG.4

FIG.5

FIG.6

FIG.7

FIG.8

FIG.9

FIG.10

FIG.11

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3329810 A1
- EP 3100652 A
- EP 3100653 A
- EP 3100654 A
- EP 3100655 A